# EUROPÄISCHE PATENTANMELDUNG

(11) **EP 4 674 509 A1**
(43) Veröffentlichungstag der Anmeldung: **07.01.2026**
(21) Anmeldenummer: 24186840.5
(22) Anmeldetag: 05.07.2024
(51) Int. Cl.: B01D 53/14

(54) **VERFAHREN ZUM ABSONDERN VON KOHLENDIOXID AUS EINEM GASGEMISCH UND VORRICHTUNG HIERZU**

(71) Anmelder: Siemens Aktiengesellschaft, 80333 München (DE)
(72) Erfinder: Hammer, Thomas, 91334 Hemhofen (DE)
(74) Vertreter: Siemens Patent Attorneys

(57) **Zusammenfassung**

Die Erfindung betrifft ein Verfahren zum Absondern von Kohlendioxid (2) aus einem Gasgemisch (4), wobei das Gasgemisch (4) mit einem Sorptionsmittel (6) zusammengebracht wird, wobei das im Gasgemisch (4) enthaltene Kohlendioxid (2) vom Sorptionsmittel (6) sorbiert wird und ein Sorbat (8) entsteht und in einem Wärmebehandlungsschritt (10) das Sorbat (8) auf eine Temperatur erhitzt wird, die über einer Sorptionstemperatur liegt und das Kohlendioxid (2) aus dem Sorbat (8) desorbiert wird und das so rückgewonnene Sorptionsmittel (6) erneut mit dem Gasgemisch (4) zusammengebracht wird, dadurch gekennzeichnet, dass
- ein Prozesssteuerungssystem (12) vorgesehen ist,
- das in Verbindung mit einem Energieversorgungsnetz (14) steht und
- ein Schwellwert (16) für eine Zustandsgröße (18) des Energieversorgungsnetzes (14) festgelegt wird und
- der Wärmebehandlungsschritt (10) zur Desorption des Kohlendioxids durch das Prozesssteuerungssystem (12) dann eingeleitet wird, wenn der Schwellwert (16) erreicht wird.

## Beschreibung

Die Erfindung betrifft ein Verfahren zum Absondern von Kohlendioxid aus einem Gasgemisch nach dem Oberbegriff des Patentanspruchs 1 sowie eine Vorrichtung zum Abtrennen von Kohlendioxid aus einem Gasgemisch nach dem Oberbegriff des Patentanspruchs 12.

Um den Temperaturanstieg weltweit auf Werte von 1,5 K oder kleiner zu begrenzen, müssen etwa 20 Jahre negative Kohlendioxid-Emissionen erreicht werden. Dies erfordert nicht nur Netto-Null-Emissionen von Energieumwandlungsprozessen, sondern auch die Entfernung von Kohlendioxid aus der Umgebungsluft mittels der sogenannten DirectAir Capture (DAC)-Technologie. Aus thermodynamischen Gründen ist Energie notwendig, Kohlendioxid aus Luft oder Abgasen abzuscheiden, zu transportieren und entweder sicher zu speichern, sodass eine erneute Emission vermieden wird (CCS: Carbon Capture and Storage) oder als Kohlenstoffrohstoff für die chemische Industrie zu nutzen (CCU: Carbon Capture and Utilization). Die Bereitstellung der für DAC benötigten Energie muss weniger Kohlendioxid ausstoßen als abgeschieden wird.

Generell stehen zwei Verfahren zur Kohlendioxidabscheidung aus Luft zur Verfügung. Zum einen eine Temperaturwechseladsorption und eine Druckwechseladsorption. Dabei ist das robustere Verfahren aus diesseitiger Sicht die Temperaturwechseladsorption. In Bezug auf das Sorptionsmittel und auf den Reaktor kann der Prozess z. B. auf einem Festbett oder in einem Wirbelschichtreaktor oder über flüssiges Sorptionsmittel betrieben werden. Bisher wurde die Demonstration von DAC im Pilotmaßstab beispielsweise in Island mit einem Festbettreaktor und einer Temperaturwechseladsorption durchgeführt, was von der Firma Climeworks betrieben wird. Hierbei erfolgt die Adsorption bei einer Temperatur von < 50°C mit einem Luftventilator und einem Festbettabsorber. Für die thermische Regeneration, die bei Temperaturen über 100°C erfolgt, wird Geothermie genutzt, die in Island leicht verfügbar ist. Kontinuierliche regenerative Energie in Form von Geothermie ist jedoch weltweit nur selten verfügbar, weshalb der Abscheideprozess von Kohlendioxid aus einem Gasgemisch, also beispielsweise der Luft, mit verfügbarer Energie betrieben werden muss, die zum Teil selbst unter Ausstoß von Kohlendioxid erzeugt wird.

Die Aufgabe der Erfindung besteht darin, ein Verfahren sowie eine Vorrichtung bereitzustellen, mittels dem bzw. mittels der Kohlendioxid aus einem Gasgemisch wie beispielsweise Luft abgeschieden wird, und dabei der Verbrauch von Kohlendioxid für die bereitgestellte Energie reduziert wird.

Die Lösung Aufgabe besteht in einem Verfahren mit den Merkmalen des Patentanspruchs 1 sowie in einer Vorrichtung mit den Merkmalen des Patentanspruchs 12.

Das Verfahren zum Absorbieren von Kohlendioxid aus einem Gasgemisch ist in der Art ausgestaltet, dass das Gasgemisch mit einem Sorptionsmittel zusammengebracht wird, wobei das im Gasgemisch enthaltene Kohlendioxid vom Sorptionsmittel sorbiert wird und ein Sorbat entsteht. In einem weiteren Wärmebehandlungsschritt wird das Sorbat auf eine Temperatur erhitzt, die über einer Sorptionstemperatur liegt, wobei das Kohlendioxid aus dem Sorbat desorbiert wird. Das so rückgewonnene Sorptionsmittel wird erneut mit dem Gasgemisch zusammengebracht. Die Erfindung zeichnet sich dadurch aus, dass ein Prozesssteuerungssystem vorgesehen ist, das in Verbindung mit einem Energieversorgungsnetz steht und ein Schwellenwert für eine Zustandsgröße des Energieversorgungsnetzes festgelegt wird, wobei der Wärmebehandlungsschritt zur Desorption des Kohlendioxids und das Prozesssteuerungssystem dann eingeleitet wird, wenn der Schwellwert erreicht bzw. überschritten und unterschritten wird, was jeweils davon abhängt, von welcher Seite sich dem Schwellwert genähert wird.

Der wesentliche Vorteil zum Stand der Technik besteht darin, dass die CO2-Abscheidung aus der Luft in zwei Verfahren unterteilt wird, der das Sorptionsmittel betreffende Abscheideprozess an sich, also die Adsorption und Absorption des Kohlendioxids in einem Generator und auf der anderen Seite den Regenerationsprozess des Sorptionsmittels, also die Desorption. Der Vorteil liegt darin, dass bei diesem zweistufigen Prozess die Energiespeicherfähigkeit des Sorptionsmittels genutzt werden kann, um die Nutzung der erneuerbaren Energien direkt vor Ort an der Vorrichtung oder im Verfahren zu optimieren. Hierzu ist insbesondere die Einführung des Schwellenwertes von Bedeutung, der als Grenzwert dafür geeignet ist, ob erneuerbare Energien, also Energien mit einem geringen Kohlendioxidverbrauch in ausreichendem Maße zur Verfügung stehen und der Prozess weitergeführt werden kann.

Hierbei ist es auch zweckmäßig, einen zusätzlichen Speicher für das Sorbat, also das Sorptionsmittel bereitzustellen, das mit dem Kohlendioxid belegt ist. In diesem Zwischenspeicher kann eben dieses Sorbat gelagert werden, bis genügend regenerative Energie zur Verfügung steht.

Die in diesem Zusammenhang verwendeten Begriffe werden anhand der folgenden Definitionen beschrieben:
Ein Gasgemisch ist insbesondere Luft, die von Natur aus Kohlendioxid enthält, es kann aber auch ein Abgas, z. B. aus einem Zementwerk sein.

Sorption ist eine Sammelbezeichnung für Vorgänge, die zu einer Anreicherung eines Stoffes innerhalb einer Phase oder auf einer Grenzfläche zwischen zwei Phasen führen. Die Anreicherung innerhalb einer Phase nennt man genauer Absorption, die an der Grenzfläche Adsorption. Der sorbierende Stoff wird Sorbent oder Sorptionsmittel genannt. Der noch nicht sorbierte Stoff (in dem vorliegenden Fall das Kohlendioxid) wird als Sorptiv bezeichnet, während er nach der Sorption Adsorpt bzw. Absorpt genannt wird. Das System aus an- bzw. eingelagertem (sorbiertem) Stoff mit dem Sorptionsmittel zusammen wird als Sorbat bezeichnet.

Das Energieversorgungsnetz ist in der Regel ein Stromnetz, in dem elektrische Energie zur Verfügung steht. Dabei kann es sich um eine regionales Netz oder überregionales Netz, jedoch auch um ein lokales Netz, wie ein firmeninternes Netz handeln. Bei dem Energieversorgungsnetz kann es sich aber auch um ein Fernwärmenetz handeln. Das Prozesssteuerungssystem steht mit dem Energieversorgungsnetz in Verbindung, worunter eine Verbindung z. B. zu einer Netzleitwarte oder zu einer Strombörse besteht. Die Verbindung kann beispielsweise in Form einer Datenverbindung beispielsweise in einem Intranet oder einem Internet vorliegen.

Schwellwert und Zustandsgröße: Die Zustandsgröße des Netzes ist eine Größe, die den Energieinhalt, die verfügbaren Energiemengen und/oder die Netzstabilität beschreibt. Sie kann dabei eine direkt Zustandsgröße sein, wie beispielsweise die Netzfrequenz, sie kann aber auch eine indirekte Zustandsgröße sein, wie beispielsweise ein Preis an der Strombörse, der eben indirekt den technischen Netzzustand widerspiegelt. Der Schwellwert der Zustandsgröße kann daher von oben oder unter erreicht werden, je nachdem wie die Zustandsgröße gewählt ist. Unter dem Begriff "erreicht" wird demnach auch erreicht und überschritten, bzw. unterschritten verstanden, je nachdem von welcher Seite der Schwellwert erreicht wird. Ist die Zustandsgröße der Preis am Strommarkt, dann erfolgt der Wärmebehandlungsschritt zur Desorption in der Zeit, in der der Strompreis kleiner oder gleich dem Schwellwert ist. Ist die Zustandsgröße beispielsweise eine Energiemenge, die von Erzeugern in das Energienetz eingespeist wird, so wird der Schwellwert von unten erreicht und der Wärmebehandlungsschritt zur Desorption des Kohlendioxids erfolgt, wenn die Energiemenge größer oder gleich dem Schwellwert ist.

Thermische Interaktion umfasst alle Wärmetauschprozesse, die auf Wärmeleitung durch Diffusion, Konvektion, Strömung oder Strahlung basieren. Hierunter fallen zum Beispiel Wärmetauscher nach dem Gegenstromprinzip, dem Gleichstromprinzip und dem Kreuzstromprinzip, aber auch Kühlkörper die von einem Fluid (z. B. Luft, Wasser) umströmt werden. Hierbei können die Wärmetauschmedien unterschiedlicher Paarung sein, z. B. fest/flüssig, gasförmig/flüssig, gasförmig/fest sowie flüssig/flüssig und gasförmig/gasförmig. Wärme umfasst sowohl die mit Temperaturänderung verknüpfte sensible Wärme als auch die mit Phasenübergängen verknüpfte latente Wärme. Auch Aggregatszustandsänderungen während der thermischen Interaktion sind daher möglich. Für den Fall, dass Fluide als Wärmeträger im Wärmetauschvorgang eingesetzt werden, soll eine Vermischung von Fluiden in den wärmeübertragenden Systemen vermieden werden.

In einer weiteren vorteilhaften Ausgestaltungsform der Erfindung wird der Wärmebehandlungsschritt zur Desorption mittels einer Wärmepumpe ausgeführt. Die Wärmepumpe hat den Vorteil, dass sie eine höhere Effizienz hat als eine übliche elektrisch betriebene Heizung und gegenüber mit Gas oder fossilem Brennstoff betriebenen Heizungen die Verwendung von regenerativ erzeugtem elektrischem Strom ermöglicht.

In einer weiteren Ausgestaltungsform der Erfindung weist die Wärmepumpe einen Verdampfer und einen Kondensor zum Verdampfen und Kondensieren eines Kältemittels auf. Die Einbindung des Verdampfers und des Kondensors in die Aufheiz- und Abkühlprozesse des beschriebenen Verfahrens ist dabei besonders zweckmäßig.

In einer weiteren Ausgestaltungsform der Erfindung wird das Sorptionsmittel nach der Desorption des Kohlendioxids mittels eines Wärmetauschprozesses abgekühlt und die Abwärme in einem ersten Wärmespeicher gespeichert. Somit kann die Abwärme des Prozesses gespeichert werden und möglicherweise einer anderen Nutzung zugeführt werden, sie kann aber auch in einer zweckmäßigen Ausgestaltungsform so verwendet werden, dass dieser erste Wärmespeicher mit dem Verdampfer der Wärmepumpe in thermischer Interaktion steht. Das heißt die Energie, die aus dem Wärmetauschprozess gewonnen wird, kann direkt oder indirekt über den Wärmespeicher an den Verdampfer der Wärmepumpe weitergeleitet werden, sodass diese Wärmeenergie für einen effektiven Betrieb der Wärmepumpe genutzt werden kann.

In einer weiteren vorteilhaften Ausgestaltungsform der Erfindung steht der Kondensor in thermischer Interaktion mit einem zweiten Wärmespeicher, der durch die Kondensationsenergie des Kältemittels der Wärmepumpe erwärmt wird. Hierbei handelt es sich um einen herkömmlichen Wärmespeicher in einer Wärmepumpe, der wiederum dazu geeignet ist, mit dem Sorbat in thermische Interaktion zu treten. Somit ist dieser Wärmespeicher dazu geeignet als Heizvorrichtung für das Sorbat zu dienen und dient zur Desorption des Kohlendioxids vom Sorbat. Auf diese Weise ist die Wärmepumpe so in den Abscheideprozess des Kohlendioxids eingebunden, dass der Energieverbrauch zur Abscheidung gegenüber dem Stand der Technik deutlich reduziert wird.

In einer weiteren Ausgestaltungsform der Erfindung ist das Sorptionsmittel ein Amin, insbesondere Monoethanolamin. Ferner ist es zweckmäßig, dass als Sorptionsmittel eine ionische Flüssigkeit verwendet wird, insbesondere eine, die als Anion ein Hexaflurophosphat und/oder ein Tetrafluroborat enthält.

Zudem kann es zweckmäßig sein, dass das Sorptionsmittel Wasser zumindest umfasst oder aus diesem im Wesentlichen besteht.

Ein weiterer Bestandteil der Erfindung ist eine Vorrichtung zum Abtrennen von Kohlendioxid aus einem Gasgemisch, wobei die Vorrichtung einen Sorptionsmittelspeicher, einen Kohlendioxidabsorptionsreaktor, eine Heizvorrichtung zum Erhitzen eines Sorbats und einen Desorptionsreaktor umfasst. Die Erfindung zeichnet sich dadurch aus, dass eine Wärmepumpe mit einem Verdampfer und einem Kondensor für ein Kältemittel vorgesehen ist und dass eine Wärmetauschvorrichtung zum Abkühlen des durch Desorption des Kohlendioxids regenerierten Sorptionsmittels vorgesehen ist, die in thermischer Interaktion mit dem Verdampfer der Wärmepumpe steht, und dass ein Prozesssteuerungssystem vorgesehen ist, das zur Ansteuerung des Betriebs der Wärmepumpe vorgesehen ist.

Auch die Vorrichtung hat die gleichen Vorteile, wie sie bereits zum Verfahren beschrieben sind. Insbesondere sind diese die Trennung von Teilprozessen, sodass es ermöglicht wird, das Kohlendioxid vom Sorbat dann zu desorbieren, wenn genügend regenerativ erzeugte Energien zur Verfügung stehen. Dabei wird mittels der Wärmepumpe die Prozessabwärme gegenüber dem Stand der Technik optimiert genutzt, sodass der Betrieb der Wärmepumpe im direkten Zusammenhang mit der aus dem Prozess rückgewonnene Wärmeenergie steht.

In einer weiteren Ausgestaltungsform der Erfindung ist ein erster Wärmespeicher vorgesehen, der in thermischer Interaktion mit dem Verdampfer der Wärmepumpe und der Wärmetauschvorrichtung zum Abkühlen des desorbierten Sorptionsmittels steht. In diesem ersten Wärmespeicher kann überschüssige Energie aus dem Abkühlprozess zwischengespeichert werden und bei Bedarf und bei Betrieb der Wärmepumpe als Energie zum Betreiben des Verdampfers eingesetzt werden.

In einer weiteren Ausgestaltungsform der Erfindung ist ein zweiter Wärmespeicher vorgesehen, der mit der Heizvorrichtung zum Erhitzen des Sorbats in thermischer Interaktion steht, wobei der zweite Wärmespeicher wiederum mit dem Kondensor der Wärmepumpe in thermischer Interaktion steht. Auch hier ist es möglich, bei überschüssiger regenerativer Energie den zweiten Wärmespeicher mit Wärmeenergie zu füllen und diesen zum Betreiben des Prozesses und der Vorrichtung dann zum einen für die Wärmepumpe und zum anderen für den Betrieb der Vorrichtung einzusetzen, wenn nicht genügend Energie aus regenerativen Energiequellen zur Verfügung steht.

Ferner ist es zweckmäßig, einen Sorbatspeicher vorzusehen, in dem das Sorbat für eine gewisse Zeit zwischengespeichert werden kann, bevor das Kohlendioxid desorbiert wird. Somit kann auch hier eine Trennung der einzelnen Prozessschritte erfolgen und auf die Verfügbarkeit von regenerativ erzeugter Energie gewartet werden.

Weitere Ausgestaltungsformen der Erfindung und weitere Beispiele werden anhand der folgenden Figurenbeschreibungen gezeigt. Dabei handelt es sich um rein schematische Ausgestaltungsformen, die keine Einschränkung des Schutzbereichs darstellen.

Dabei zeigen:
- Figur 1: eine Anlage zur Abtrennung von Kohlendioxid aus einem Gasgemisch, die in Zusammenhang mit einem Energieversorgungsnetz steht,
- Figur 2a: eine Anlage gemäß Figur 1 mit einer Heizvorrichtung in Form einer Wärmepumpe und
- Figur 2b: dem Wärmepumpenkreislauf aus Figur 2a veranschaulicht in einer Skizze.

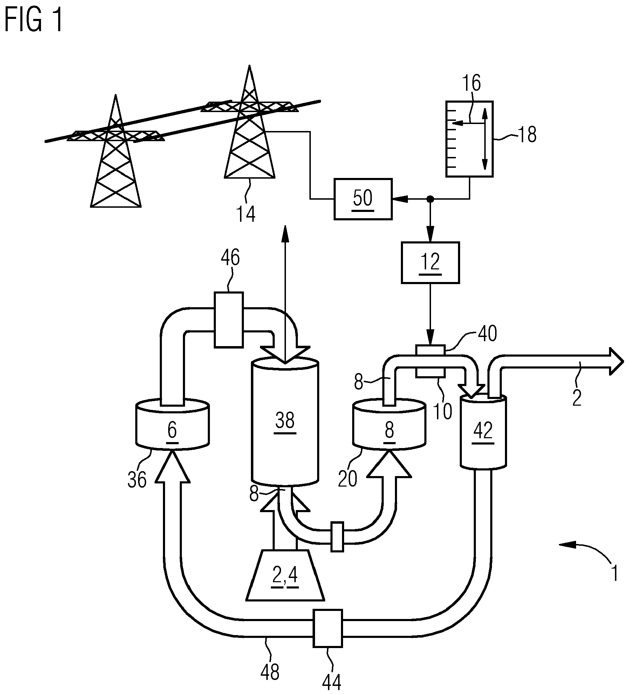

In Figur 1 ist schematisch der Ablauf zum Abscheiden von Kohlendioxid (CO₂) 2 aus einem Gasgemisch 4 beschrieben. Unter einem Gasgemisch 4 wird hier ein Gasgemisch, insbesondere Luft bzw. verunreinigte Luft, verstanden. Beispielsweise kann ein Abgas aus einem Zementwerk von Kohlendioxid (CO₂) befreit werden. Bei derartigen Abgasen ist der Kohlendioxidgehalt sehr hoch. Das gezeigte Verfahren, ist jedoch auch dazu geeignet, aus normaler, und nicht verunreinigte Luft, die derzeit weltweit im Durchschnitt etwa einen Kohlendioxidanteil von 440 ppm aufweist, Kohlendioxid abzuscheiden. Ein derartiges Verfahren zur Abscheidung von Kohlendioxid aus der Luft wird auch als DirectAir Capture (DAC)-Verfahren 1 bezeichnet. Hierzu wird zunächst ein Sorptionsmittel 6 in einem Sorptionsreaktor 38 oder einem Sorptionsmittelspeicher 36 vorgehalten. Bei dem Sorptionsmittel 6 handelt es sich beispielsweise um eine ionische Flüssigkeit, die als Anion dabei beispielsweise das Hexaflurophosphat oder das Tetrafluroborat enthält. Aber auch Amine wie beispielweise das Monoethanolamin sind als Sorptionsmittel geeignet.

Mittels einer Pumpe 46 wird das Sorptionsmittel in den Sorptionsreaktor 38 gebracht, wobei das Sorptionsmittel 6 in diesem Beispiel in der flüssigen Phase vorliegt. Es kann im Sorptionsreaktor 38 versprüht oder vernebelt oder durch Berieselung einer Füllkörperkolonne eingebracht werden, sodass das Sorptionsmittel 6 in einem großen Oberflächen- zu Volumen-Verhältnis vorliegt. Ein typisches Beispiel für einen derartigen Sorptionsreaktor 38 ist beispielweise ein sogenannter Rieselturm.

Durch diesen Sorptionsreaktor 38 wird nun das Gasgemisch 4 in Form von Luft geblasen, das ca. 440 ppm Kohlendioxid 2 enthält. Das Kohlendioxid 2 löst sich dabei in dem Sorptionsmittel 6 im Sorptionsreaktor 38. Es wird von diesem sorbiert. Unter Sorbieren wird hierbei sowohl die Absorption als auch die Adsorption verstanden. Das Sorptionsmittel 6, das nun mit dem CO₂ beladen ist, wird nun als Sorbat 8 bezeichnet. Das gesättigte Sorbat 8 wird im Sorptionsmittelspeicher 36 zwischengespeichert und anschließend mittels einer Heizvorrichtung 40 erhitzt, sodass das sorbierte Kohlendioxid 2 aus dem Sorptionsmittel 6 wieder austritt, wobei das Kohlendioxid 2 aufgefangen wird und einem weiteren, hier nicht näher beschriebenen Prozess zur Abkühlung und Kompression und zur Reinigung überführt wird. Anschließend kann das so abgeschiedene Kohlendioxid 2 beispielsweise in unterirdischen Kavernen eingelagert werden oder es kann auch zur Weiterverarbeitung in der chemischen Industrie genutzt werden.

Das Sorptionsmittel 6 wird im Weiteren abgekühlt und mittels einer weiteren Pumpe 48 wieder in den Sorptionsmittelspeicher 36 eingelagert. Es steht hiermit für einen erneuten Sorptionsprozess im Sorptionsreaktor 38 zur Verfügung.

Soweit der herkömmliche Abscheidungsprozess von Kohlendioxid 2 aus der Luft, wobei in der Vorrichtung bzw. der Anlage nach Figur 1 ein Prozesssteuerungssystem 12 vorgesehen ist, das in Verbindung mit einem Energieversorgungsnetz 14 steht, wobei zur Verbindung zwischen dem Prozesssteuerungssystem 12 und dem Energieversorgungsnetz 14 insbesondere die Verbindung zu einer Leitwarte 50 oder eine Strombörse geeignet ist. Ferner ist eine Zustandsgröße 18 definiert, die den energetischen Zustand des Energieversorgungsnetzes 14 beschreibt. Diese Zustandsgröße 18 kann beispielsweise die Netzwerkfrequenz sein, es kann aber auch die Summe aller in das Energieversorgungsnetz 14 eingespeisten Energie sein, aus der ablesbar ist, ob für den momentanen Energieverbrauch eher zu viel oder eher zu wenig Energie vorliegt. Unter Energie wird hier insbesondere elektrische Energie verstanden, sodass es sich bei dem Energieversorgungsnetz 14 um ein Stromnetz handelt. Grundsätzlich ist aber auch ein Wärmenetz, beispielsweise ein Fernwärmenetz, dazu geeignet, als Energieversorgungsnetz 14 im Sinne der vorliegenden Beschreibung zu dienen. Das Energieversorgungsnetz 14 kann ein überregionales und nationales Stromnetz sein, es kann aber auch ein lokales Stromnetz sein, das von einer Kommune bzw. von einem Industriewerk betrieben wird. Da die Energieversorgungsnetze 14 aufgrund der verwendeten regenerativ erzeugten Energien Schwankungen unterliegen, ist es zweckmäßig, dass die Energie, sei es Wärmeenergie oder elektrische Energie, die für den beschriebenen Prozess gemäß Figur 1 Anwendung findet, nur dann eingebracht wird, wenn bestimmte Voraussetzungen erfüllt sind. Daher ist die Zustandsgröße 18 mit einem Schwellwert 16 versehen, der grundsätzlich nach den jeweiligen Energieangeboten auch verändert werden kann. Die Zustandsgröße 18 kann auch eine indirekte technische Größe sein, so spiegelt sich die in das Energieversorgungsnetz 14 eingespeiste Energiemenge indirekt in einem Strompreis oder Energiepreis wider. Somit kann die Zustandsgröße 18 auch indirekt technisch gemessen werden, indem der Strompreis an einer Strombörse betrachtet wird und der Schwellwert 16 ein ganz bestimmter Strompreis ist, ab dem der Betrieb der beschriebenen Anlage gemäß Figur 1, insbesondere jedoch die Heizvorrichtung 40 zum Desorbieren des Sorbats 8 in Betrieb genommen wird.

Dieser Wärmebehandlungsschritt 10 wird demnach nur ausgeführt, wenn der Schwellwert 16 erreicht ist, wobei unter dem Begriff erreicht auch das Unterschreiten bzw. Überschreiten des Schwellwertes verstanden wird. Im Falle des Energiepreises als Zustandsgröße wird der Wärmebehandlungsschritt so lange ausgeführt, so lange der Schwellwert 16 unterschritten ist bzw. so lange Sorbat 8 zum Desorbieren im Sorbatspeicher 20 zur Verfügung steht. In dem Fall, dass als Zustandsgröße 18 eine Energiemenge festgelegt ist, dann wird der Wärmebehandlungsschritt 10 so lange durchgeführt, wie der Schwellwert 16 erreicht oder überschritten ist.

Auf diese Weise wird zum einen Energieversorgungsnetz 14 in einem gleichmäßigen Zustand gehalten. Es wird hierdurch z. B. auch vermieden, dass bei ausreichend Wind, aber wenig Verbrauch, beispielsweise an Wochenenden, Windräder abgeschaltet werden müssen, damit das Netz nicht überlastet wird. Diese Energie kann netzdienlich wie beschrieben zur Desorption eines Sorbats 8 und somit auch COz-neutral als Abscheider von Kohlendioxid aus der Luft dienen.

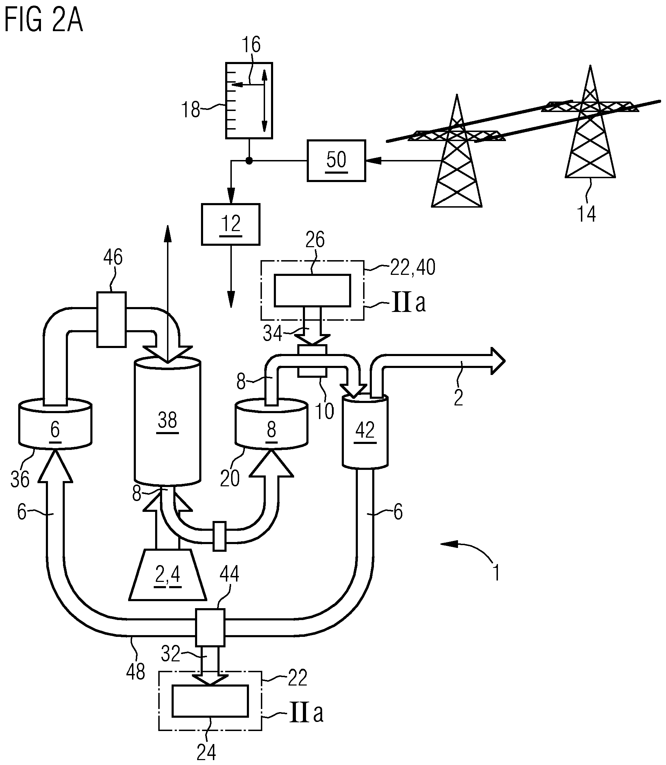

In Figur 2a ist die gleiche Anlage wie in Figur 1 beschrieben, jedoch ist als Heizvorrichtung 40 eine Wärmepumpe 22 vorgesehen, die in die DAC-Vorrichtung 1 in der Art integriert ist, dass möglichst wenig Energie beim Aufheizen und Abkühlen des Sorptionsmittels 6 verloren geht, bzw. diese möglichst vorteilhaft durch den Betrieb der Wärmepumpe 22 genutzt wird. Hierzu ist ein Verdampfer 24 vorgesehen, der über einen Wärmetauschprozess 30 in thermischer Interaktion mit dem abzukühlenden Sorptionsmittel 6 nach dem Abtrennen des Kohlendioxids 2 aus dem Sorbat in Verbindung steht. Hierzu ist eine Wärmetauschvorrichtung 44 vorgesehen, wobei es sich um eine herkömmliche Gegenstromwärmetauschanlage handelt. An der Seite des Verdampfers 24 kann auch ein Wärmespeicher 32 vorgesehen sein, der zunächst die Wärme des abzukühlenden Sorptionsmittels 6 aufnimmt, zwischenspeichert und erst bei Bedarf, wenn eben der Schwellwert 16 unter- oder überschritten ist und die Wärmepumpe 22 in Betrieb geht, diese gespeicherte Wärme an den Verdampfer 24 der Wärmepumpe 22 abgibt. Der Verdampfer 24 verdampft dabei ein Wärmemittel 28, das mittels eines hier nicht dargestellten Kompressors verdichtet wird und sich dabei aufheizt. Bei der hier verwendeten Wärmepumpe 22 handelt es sich um eine sogenannte Hochtemperaturwärmepumpe, die auch Temperaturen des verdichteten Kältemittels 28 von 80 bis 150°C erreichen können. Das so erhitzte, gasförmige Kältemittel 28 gibt in dem Kondensor 26 seine Energie an einen Wärmespeicher 34 ab. Auch hierbei handelt es sich um einen Wärmetauschprozess, wobei der Energiespeicher in der Regel auch ein flüssiges Medium enthält, das wiederum seine Wärmeenergie an das Sorbat 8 abgibt und hiermit als Heizvorrichtung 40 dient. Das Sorbat wird, wie bereits gemäß Figur 1 beschrieben, erhitzt, wobei es sich hierbei in der Regel um Temperaturen handelt, die zwischen 80 und 150°C liegen.

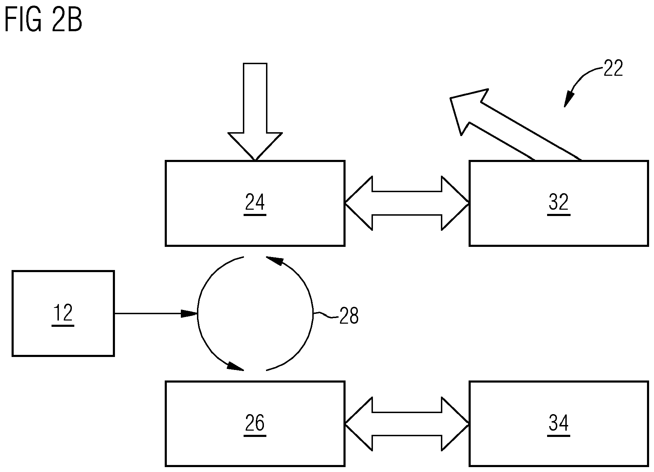

Wie bereits beschrieben, ist in Figur 2b zum einen das Prozesssteuerungssystem 12 so eingerichtet, dass bei überschüssiger Energie im Energieversorgungsnetz 14 die Wärmepumpe 22 in Betrieb gesetzt wird, wobei der beschriebene Wärmepumpenprozess mit dem Abkühlen des Sorptionsmittels 6 und der thermischen Wechselwirkung mit dem Verdampfer 24 in Kombination mit dem Aufheizen des Sorbats 8 zur Desorption mittels des Kondensors und dessen thermischen Interaktion mit dem Wärmespeicher 34 energetisch gewinnbringend in den Prozess eingebracht wird. Der Desorptionsprozess im Desorptionsreaktor 42 wird also nur dann durch das Prozesssteuerungssystem 12 eingeleitet, wenn genügend Energie im Energienetz 14 zur Verfügung steht. Bis dahin wird das Sorbat 8 im Sorbatspeicher 20 zwischengespeichert. Es kann auf diese Weise ein kontinuierlicher Abscheideprozess im Sorptionsreaktor 38 durchgeführt werden, wenn der Sorbatspeicher 20 groß genug ist und die Desorption des Sorbats 8 nur dann stattfindet, wenn genügend regenerative Energie für die Desorption zur Verfügung steht. Dabei ist zu berücksichtigen, dass gerade durch den Aufheizprozess des Sorbats 8 die meiste Prozessenergie gerade für die Desorption bereitgestellt werden muss. Es handelt sich also um eine zeitliche Trennung der einzelnen Prozessschritte des DAC-Prozesses 1, in der auf die vorhandene Energiemenge und den Zustand des Energieversorgungsnetzes 14 reagiert werden kann, sodass der DAC-Prozess 1 mit einem möglichst niedrigen eigenen CO₂-Verbrauch durchgeführt werden kann.

### Bezugszeichenliste

- 1: DAC Vorrichtung
- 2: CO2
- 4: Gasgemisch
- 6: Sorptionsmittel
- 8: Sorbat
- 10: Wärmebehandlungsschritt
- 12: Prozesssteuerungssystem
- 14: Energieversorgungsnetz
- 16: Schwellenwert
- 18: Zustandsgröße
- 20: Sorbatspeicher
- 22: Wärmepumpe
- 24: Verdampfer
- 26: Kondensator
- 28: Kältemittel
- 30: Wärmetauschprozess
- 32: erster Wärmespeicher
- 34: zweiter Wärmespeicher
- 36: Sorptionsmittelspeicher
- 38: Sorptionsreaktor
- 40: Heizvorrichtung
- 42: Desorptionsreaktor
- 44: Wärmetauschvorrichtung
- 46: erste Pumpe
- 48: zweite Pumpe
- 50: Leitwarte

## Patentansprüche

1. Verfahren zum Absondern von Kohlendioxid (2) aus einem Gasgemisch (4), wobei das Gasgemisch (4) mit einem Sorptionsmittel (6) zusammengebracht wird, wobei das im Gasgemisch (4) enthaltene Kohlendioxid (2) vom Sorptionsmittel (6) sorbiert wird und ein Sorbat (8) entsteht und in einem Wärmebehandlungsschritt (10) das Sorbat (8) auf eine Temperatur erhitzt wird, die über einer Sorptionstemperatur liegt und das Kohlendioxid (2) aus dem Sorbat (8) desorbiert wird und das so rückgewonnene Sorptionsmittel (6) erneut mit dem Gasgemisch (4) zusammengebracht wird, **dadurch gekennzeichnet, dass**
- ein Prozesssteuerungssystem (12) vorgesehen ist,
- das in Verbindung mit einem Energieversorgungsnetz (14) steht und
- ein Schwellwert (16) für eine Zustandsgröße (18) des Energieversorgungsnetzes (14) festgelegt wird und
- der Wärmebehandlungsschritt (10) zur Desorption des Kohlendioxids durch das Prozesssteuerungssystem (12) dann eingeleitet wird, wenn der Schwellwert (16) erreicht wird.

2. Verfahren nach Anspruch 1, **dadurch gekennzeichnet, dass** das Sorbat in einen Sorbatspeicher (20) geleitet wird und das Sorbat (8) bei Erreichen des Schwellwerts (16) aus dem Sorbatspeicher (20) zu dem Wärmebehandlungsschritt (10) zur Desorption geleitet wird.

3. Verfahren nach Anspruch 1 oder 2, **dadurch gekennzeichnet, dass** der Wärmebehandlungsschritt (10) zur Desorption mittels einer Wärmepumpe (22) erfolgt.

4. Verfahren nach Anspruch 3, **dadurch gekennzeichnet, dass** die Wärmepumpe (22) einen Verdampfer (24) und einen Kondensator (26) zum Verdampfen und Kondensieren eines Kältemittels (28) aufweist.

5. Verfahren nach Anspruch 3 oder 4, **dadurch gekennzeichnet, dass** das Sorptionsmittel (6) nach der Desorption des Kohlendioxids mittels eines Wärmetauschprozesses (30) abgekühlt wird und die Abwärme in einem ersten Wärmespeicher (32) gespeichert wird.

6. Verfahren nach Anspruch 5, **dadurch gekennzeichnet, dass** der Verdampfer (24) in thermischer Interaktion mit dem ersten Wärmespeicher (32) steht.

7. Verfahren nach einem der Ansprüche 4 bis 6, **dadurch gekennzeichnet, dass** der Kondensator (26) in thermischer Interaktion mit einem zweiten Wärmespeicher (34) steht, der durch die Kondensationsenthalpie des Kältemittels (28) erwärmt wird.

8. Verfahren nach Anspruch 7, **dadurch gekennzeichnet, dass** der zweite Wärmespeicher (34) mit dem Sorbat (8) in thermischer Interaktion steht.

9. Verfahren nach einem der vorhergehenden Ansprüche, **dadurch gekennzeichnet, dass** das Sorptionsmittel (6) ein Amin, insbesondere Monoethanolamin ist.

10. Verfahren nach einem der Ansprüche 1 bis 8, **dadurch gekennzeichnet, dass** das Sorptionsmittel (6) eine ionische Flüssigkeit ist, insbesondere eine, die als Anion Hexafluorophosphate und/oder Tetrafluoroborat enthält.

11. Vorrichtung zum Abtrennen von Kohlendioxid (2) aus einem Gasgemisch (4), umfassend einen Sorptionsmittelspeicher (36), einen Kohlendioxid-Sorptionsreaktor (38), eine Heizvorrichtung (40) zum Erhitzen eines Sorbats (8), einen Desorptionsreaktor (42), **dadurch gekennzeichnet, dass** eine Wärmepumpe (22) mit einem Verdampfer (24) und einem Kondensor (26) für ein Kältemittel (28) vorgesehen ist und dass eine Wärmetauschvorrichtung (44) zum Abkühlen des desorbierten Sorptionsmittel (6) vorgesehen ist, die in thermischer Interaktion mit dem Verdampfer (24) der Wärmepumpe (22) steht und dass ein Prozesssteuerungssystem (12) zur Ansteuerung des Betriebs der Wärmepumpe (22) vorgesehen ist.

12. Vorrichtung nach Anspruch 11, **dadurch gekennzeichnet, dass** ein erster Wärmespeicher (32), der in thermischer Interaktion mit dem Verdampfer (24) der Wärmepumpe (22) und der Wärmetauschvorrichtung (44) zum Abkühlen des desorbierten Sorptionsmittel (6) steht.

13. Vorrichtung nach Anspruch 11 oder 12, **dadurch gekennzeichnet, dass** ein zweiter Wärmespeicher (34) vorgesehen ist, der mit der Heizvorrichtung (40) zum Erhitzen des Sorbats (8) mit in thermischer Interaktion steht, und der zweite Wärmespeicher (34) wiederum mit dem Kondensator (26) der Wärmepumpe (22) in thermischer Interaktion steht.

14. Vorrichtung nach Anspruch 11 bis 13, **dadurch gekennzeichnet, dass** ein Sorbat-Speicher (20) vorgesehen ist.
